# EUROPÄISCHE PATENTANMELDUNG

(11) **EP 4 092 305 A1**
(43) Veröffentlichungstag der Anmeldung: **23.11.2022**
(21) Anmeldenummer: 22169498.7
(22) Anmeldetag: 22.04.2022
(51) Int. Cl.: F16L 23/20, F01N 13/18, F16J 15/06, F16L 23/18, F16L 23/032

(54) **KOPPLUNGSKOMPONENTE ZUR DICHTEN KOPPLUNG EINES ERSTEN UND EINES ZWEITEN GASFÜHRENDEN BAUTEILS EINER ABGASANLAGE**

(30) Priorität: 19.05.2021 DE 102021113025
(71) Anmelder: Friedrich Boysen GmbH & Co. KG, 72213 Altensteig (DE)
(72) Erfinder: GEBAUER, Markus, 70563 Stuttgart (DE)
(74) Vertreter: Manitz Finsterwald Patent- und Rechtsanwaltspartnerschaft mbB

(57) **Zusammenfassung**

Die vorliegende Erfindung betrifft eine Kopplungskomponente zur dichten Kopplung eines ersten und eines zweiten gasführenden Bauteils einer Abgasanlage, insbesondere zur Kopplung zweier Rohrleitungsabschnitte, wobei die Kopplungskomponente eine Öffnung (4) umfasst, in welcher ein Endabschnitt des ersten Bauteils aufnehmbar ist, und einen die Öffnung umgebenden Anlageabschnitt mit einer Anlagefläche, welche mit einer komplementären Fläche eines Anlageabschnitts einer Kopplungskomponente des zweiten Bauteils in Anlage bringbar ist und die eine die Öffnung radial außerhalb und in Umfangsrichtung umgebende Nut (10) umfasst, die zumindest eine Durchbrechung (14) aufweist, und eine in der Nut angeordnete, hitzebeständige Dichtung (12), die zumindest teilweise aus Graphit gefertigt ist und die zumindest einen Fixierabschnitt aufweist, der zumindest abschnittsweise in die Durchbrechung hineinragt und mit dieser eine Klemmverbindung und/oder einen Formschluss ausbildet, um die Dichtung verliersicher in der Nut zu fixieren. Die Erfindung betrifft außerdem ein Verfahren zur Herstellung einer solchen Kopplungskomponente.

## Beschreibung

Die vorliegende Erfindung bezieht sich auf eine Kopplungskomponente zur dichten Kopplung eines ersten und eines zweiten gasführenden Bauteils einer Abgasanlage und auf ein Verfahren zur Herstellung einer entsprechenden Kopplungskomponente.

Abgasanlagen, wie sie vor allem in der Automobilbranche eingesetzt werden, führen Verbrennungsprodukte eines Verbrennungsmotors über gasführende Bauteile und insbesondere Rohrleitungen ab. Solche Anlagen umfassen in der Regel auch schalldämpfende und/oder abgasreinigende Komponenten. Um zu verhindern, dass die Verbrennungsprodukte (Abgase) ungereinigt in die Umgebungsluft gelangen, ist es Gasdichtheit der Anlage von großer Bedeutung.

Entsprechend wichtig ist daher eine dichte Kopplung der gasführenden Bauteile, um die Gase auf sichere Weise abführen zu können. Für die Kopplung der gasführenden Bauteile werden in der Regel Kopplungskomponenten wie etwa Flansche verwendet, welche an den gasführenden Bauteilen befestigt sind. Um die Kopplung der gasführenden Bauteile so dicht wie möglich zu gestalten, wird eine Dichtung verwendet, die zwischen den Kopplungskomponenten angeordnet ist und die einen ungewünschten Gasaustritt verhindert. Die entsprechenden gasführenden Bauteile mit daran befestigten Kopplungskomponenten werden in der Regel vorgefertigt beim Fahrzeughersteller angeliefert und dann am Fahrzeug montiert.

Die Kopplungskomponenten werden in der Regel separat von den Dichtungen transportiert, so dass eine erhöhte Verlustgefahr der Dichtungen besteht. Zusätzlich müssen die Dichtungen bei der Montage an dem Fahrzeug an den jeweiligen Kopplungskomponenten korrekt positioniert werden, was einen erhöhten Zeitaufwand darstellt.

Eine der Erfindung zugrundeliegende Aufgabe ist es daher, bei diesen Problemen Abhilfe zu schaffen.

Die der Erfindung zugrundeliegende Aufgabe wird durch den Gegenstand des Anspruchs 1 gelöst.

Erfindungsgemäß umfasst die Kopplungskomponente zur dichten Kopplung eines ersten und eines zweiten gasführenden Bauteils einer Abgasanlage, insbesondere zur Kopplung zweier Rohrleitungsabschnitte,
eine Öffnung, in welcher ein Endabschnitt des ersten Bauteils aufnehmbar ist;
einen die Öffnung umgebenden Anlageabschnitt mit einer Anlagefläche, die mit einer komplementären Fläche eines Anlageabschnitts einer Kopplungskomponente des zweiten Bauteils in Anlage bringbar ist und die eine die Öffnung radial außerhalb und in Umfangsrichtung umgebende Nut umfasst, die zumindest eine Durchbrechung aufweist; und
eine in der Nut angeordnete, hitzebeständige Dichtung, die zumindest einen Fixierabschnitt aufweist, der zumindest abschnittsweise in die Durchbrechung hineinragt und mit dieser eine Klemmverbindung und/oder einen Formschluss ausbildet, um die Dichtung verliersicher in der Nut zu fixieren.

Kurz gesagt sorgt ein Fixierabschnitt der Dichtung, welcher abschnittsweise und/oder vollständig in die zumindest eine Durchbrechung der Nut hineinragt, dafür, dass die Dichtung in der Nut fixiert ist, indem die Dichtung mit der Durchbrechung eine Klemmverbindung und/oder einen Formschluss bildet. Dadurch wird die Dichtung in der Nut so fixiert, dass ein Verlust der Dichtung beim Transport der Kopplungskomponente verhindert wird und auf einen zusätzlichen Montageschritt beim Fahrzeughersteller (nämlich das Einlegen der Dichtung) verzichtet werden kann. Durch eine lagekorrekte Vormontage der Dichtung wird zudem eine potentielle Fehlerquelle bei der Anbringung der Kopplungskomponente an einer komplementären Komponente des Fahrzeugs eliminiert.

Insbesondere ist die Dichtung ringförmig ausgebildet.

Wie bereits erwähnt wurde, kann der Fixierabschnitt dabei abschnittsweise und/oder vollständig in die Durchbrechung hineinragen. Der Fixierabschnitt kann aber auch durch die Durchbrechung hindurchragen, so dass ein Teil des Fixierabschnitts an einer Rückseite, d.h. eine der Anlagefläche abgewandten Seite, über einen Rand der Durchbrechung hinausgeht bzw. davon absteht. Insbesondere umfasst die Kopplungskomponente eine Vielzahl von Durchbrechungen und Fixierabschnitten. Die Anzahl an Fixierabschnitten und Durchbrechungen ist dabei bevorzugt gleich. Die Kopplungskomponente kann bevorzugt mindestens zwei Durchbrechungen und vorzugsweise mehr als zwei Durchbrechungen aufweisen. Die Durchbrechungen können dabei eine beliebige Anordnung und Form aufweisen. Die Durchbrechungen sind jedoch bevorzugt um Umfangsrichtung gleichmäßig verteilt angeordnet. Zusätzlich oder alternativ können die Durchbrechungen jedoch auch achsensymmetrisch, punktsymmetrisch oder auf eine andere symmetrische Art und Weise angeordnet sein. Die Durchbrechungen können eine kreisrunde, ovale, quadratische, rechteckige, polygonale oder jede andere geometrische Form aufweisen. Eine Wandung der Durchbrechung kann zudem parallel und/oder senkrecht und/oder in einem anderen Winkel zur axialen Richtung der Durchbrechung verlaufen.

Ebenso kann die Nut eine beliebige Form aufweisen. Beispielsweise ist ein Querschnitt der Nut zumindest abschnittsweise konisch, gekrümmt oder rechteckig geformt. Mischformen sind denkbar. Die Nut kann - in einer Frontalansicht der Anlagefläche gesehen - eine kreisrunde, ovale, quadratische, rechteckige, polygonale oder jede andere geometrische Grundform aufweisen. Auch diesbezüglich sind Mischformen möglich.

Entsprechend kann die Kopplungskomponente eine beliebige Grundform oder Außenkontur aufweisen. Die erfindungsgemäße Kopplungskomponente kann insbesondere zur Kopplung von Rohren, Stutzen oder jeglichen anderen rohrartigen Bauteilen verwendet werden.

Weitere Ausführungsformen der Erfindung sind der Beschreibung, den Unteransprüchen sowie den Zeichnungen zu entnehmen.

Um den hohen Temperaturen, die in Abgasanlagen insbesondere in motornahen Bereichen auftreten, standhalten zu können, kann die Dichtung der Kopplungskomponente zumindest teilweise aus Graphit gefertigt sein. Grundsätzlich können aber auch andere geeignete, hitzebeständige Materialien zum Einsatz gelangen. Insbesondere ist die Dichtung so ausgelegt, dass sie Temperaturen bis zumindest 550°C standhält.

Gemäß einer ersten Ausführungsform ist die Kopplungskomponente flanschartig ausgebildet.

Gemäß einer weiteren Ausführungsform ist die Kopplungskomponente mit dem ersten Bauteil der Abgasanlage einstückig ausgebildet und/oder stoffschlüssig, kraftschlüssig und/oder formschlüssig verbunden. Beispielsweise ist die Kopplungskomponente einstückig ausgebildet, indem ein Endabschnitt des ersten Bauteils der Abgasanlage entsprechend umgeformt ist. Die Kopplungskomponente kann aber auch stoffschlüssig durch beispielsweise Löten, Kleben und/oder Schweißen mit dem ersten gasführenden Bauteil verbunden sein. Es ist beispielsweise aber auch möglich, dass die Kopplungskomponente zusätzlich oder alternativ mittels einer Schraub- (insbesondere mittels einer Mehrzahl von Schrauben und Muttern), Steck- und/oder Rastverbindung mit dem ersten gasführenden Bauteil verbunden ist. Insbesondere kann die Kopplungskomponente als ein vergleichsweise flaches Element ausgebildet sein und einen Ansatz, Bund oder Stutzen aufweisen, der mit dem gasführenden Bauteil verbunden wird, beispielsweise durch Verschweißen.

Gemäß einer weiteren Ausführungsform weist der Anlageabschnitt einen Befestigungsabschnitt auf, mittels dem die Kopplungskomponente an der Kopplungskomponente des zweiten Bauteils befestigbar ist, insbesondere lösbar befestigbar. Der Befestigungsabschnitt kann hierfür eine Mehrzahl von Öffnungen umfassen. Beispielsweise kann die an der zweiten Kopplungskomponente anliegende erste Kopplungskomponente kraftschlüssig und/oder formschlüssig mittels Schraubverbindungen, insbesondere mittels Schrauben und Muttern, verbunden werden.

Gemäß einer weiteren Ausführungsform ist die Dichtung ein Verbundbauteil, das neben Graphit eine metallische Komponente umfasst und insbesondere ein Drahtgestrick, welches als Trägerelement für das Graphit dienen kann. Ein Material des Drahtgestricks kann Stahl und insbesondere Edelstahl umfassen. Beispielsweise umfasst das Drahtgestrickmaterial Chrom, Titan, Nickel, Molybdän, Niob, Aluminium, jedes andere geeignete Metall oder eine Kombination davon. Das Drahtgestrick kann zumindest teilweise von Graphit durchdrungen sein. Alternativ oder zusätzlich können das Graphit und das Drahtgestrick schichtweise aufgebaut sein, so dass auf zumindest einer Schicht Drahtgestrick jeweils zumindest eine Schicht Graphit liegt, wobei die Dichtung bevorzugt mehrere solcher Schichten aufweist.

Gemäß einer weiteren Ausführungsform umfasst der Fixierabschnitt eine an der Dichtung ausgebildete und vorgefertigte Erhebung. Vorgefertigt bedeutet in diesem Zusammenhang, dass die Erhebung bereits vor einem Einsetzen der Dichtung in die Nut vorhanden war. Insbesondere kann die Dichtung eine Mehrzahl von Erhebungen aufweisen und bevorzugt eine Anzahl an Erhebungen, welche einer Anzahl an Durchbrechungen entspricht. Die Erhebungen sind bevorzugt komplementär zu den Durchbrechungen der Nut angeordnet und geformt, d.h. die Erhebungen der Dichtung ragen nach deren Vormontage in die Durchbrechungen hinein und bilden eine kraftschlüssige Verbindung zwischen der Dichtung und den Durchbrechungen der Nut. Wenn die Durchbrechungen beispielsweise eine eckige, kreisrunde oder ovale Form aufweisen, so können die Erhebungen zweckmäßigerweise eine komplementäre Form aufweisen.

Gemäß einer weiteren Ausführungsform ist der in die Durchbrechung hineinragende Fixierabschnitt zumindest abschnittsweise elastisch verformt. Die elastische Verformung der Dichtung innerhalb der Durchbrechung kann zu einer rein elastischen Klemmwirkung führen, welche die Dichtung in der Nut fixiert. Beispielsweise bei einer abgestimmten Dimensionierung der zumindest einen Erhebung und der zumindest Durchbrechung, so dass erstere passgenau in zweitere einführbar ist, kann eine die Dichtung fixierende elastische Klemmwirkung erzeugt werden.

Gemäß einer weiteren Ausführungsform ist der in die Durchbrechung hineinragende Fixierabschnitt zumindest abschnittsweise plastisch verformt. Insbesondere kann der Fixierabschnitt zusätzlich oder alternativ zu einer elastischen Verformung des Fixierabschnitts plastisch verformt sein. In vielen Fällen mag es vorteilhaft sein, sowohl eine elastische als auch eine plastische Verformung des Fixierabschnitts anzustreben. Durch eine plastische Verformung des Fixierabschnitts kann dieser gegen eine Wandung der Durchbrechung gedrückt werden, so dass eine Klemmwirkung erzeugt wird, welche die Dichtung in der Nut fixiert.

Gemäß einer weiteren Ausführungsform hintergreift ein plastisch verformter Teil des Fixierabschnitts einen Rand der Durchbrechung auf der der Anlagefläche abgewandten Seite zumindest teilweise. Das bedeutet, dass ein Teil des Fixierabschnitts mittels eines Hinterschnitts auf der der Anlagefläche abgewandten Seite fixiert wird, sodass eine formschlüssige Verbindung zwischen dem Fixierabschnitt und der Nut entsteht. Der Hinterschnitt kann dabei eine beliebige Form aufweisen, beispielsweise eine L- oder V-Form oder eine Hakenform.

Gemäß einer weiteren Ausführungsform weist die Dichtung auf der der Anlagefläche abgewandten Seite im Bereich der Durchbrechung zumindest abschnittsweise eine Vertiefung auf. Die Vertiefung kann ein Resultat einer plastischen Verformung sein, durch die Material verdrängt wurde, um eine Klemmwirkung mit der Wandung der Durchbrechung und/oder einen Hinterschnitt zu erzeugen. Insbesondere weist die Vertiefung in einem Querschnitt eine konische Form oder Keilform auf.

Gemäß einer weiteren Ausführungsform ist die zumindest eine Durchbrechung an einem Nutgrund der Nut angeordnet, insbesondere wobei die Durchbrechung auch zumindest einen Abschnitt zumindest einer der Seitenwände der Nut umfasst. Der Nutgrund ist dabei der Teil der Nut, der die Seitenwände der Nut miteinander verbindet. Zusätzlich oder alternativ kann auch zumindest eine Durchbrechung und/oder Vertiefung in einer der Seitenwände der Nut vorgesehen sein. Beispielsweise kann durch eine Kraftbeaufschlagung der Dichtung in Montagerichtung und/oder durch die Durchbrechung hindurch Dichtungsmaterial verdrängt und in die seitliche Durchbrechung und/oder Vertiefung gepresst werden. Ein dadurch in die seitliche Durchbrechung und/oder Vertiefung hineinragender Teil der Dichtung bildet einen Hinterschnitt und kann für eine zusätzliche Fixierung der Dichtung in der Nut sorgen.

Gemäß einer weiteren Ausführungsform weist eine Wandung der Durchbrechung Wandungsabschnitte auf, die in axialer Richtung der Durchbrechung gesehen, nicht parallel zueinander verlaufen, insbesondere wobei die Wandungsabschnitte von der Nut aus gesehen divergieren. Hierdurch ist der in die Durchbrechung hineinragende Fixierabschnitt von einer der Anlagefläche entgegengesetzten Seite leichter zugänglich, so dass ein Hinterschnitt des Fixierabschnitts leichter erzeugbar ist. Insbesondere können die Wandungsabschnitte senkrecht zur axialen Richtung der Durchbrechung stehen. Es ist auch vorstellbar, dass bei einer Mehrzahl von Durchbrechungen die Wandungsabschnitte der einzelnen Durchbrechungen unterschiedlich zueinander verlaufen. Beispielsweise kann eine Durchbrechung Wandungsabschnitte aufweisen, die in axialer Richtung gesehen, nicht parallel zueinander verlaufen, während eine andere Durchbrechung Wandungsabschnitte aufweist, die in axialer Richtung der Durchbrechung gesehen parallel zueinander verlaufen.

Gemäß einer weiteren Ausführungsform weist die Dichtung zumindest abschnittsweise einen Querschnitt auf, der sich in Richtung eines Nutgrundes der Nut verjüngt, insbesondere wobei der Querschnitt abschnittsweise konisch ist. Eine abschnittsweise konische Form der Dichtung kann das Einführen der Dichtung in die Nut und/oder in die Durchbrechung erleichtern. Zusätzlich kann sich bei einem komplementären Nutquerschnitt die Dichtung besser an die Nut anschmiegen, so dass eine bessere Dichtwirkung entsteht. Beispielsweise kann die Nut einen abschnittsweise konischen Nutquerschnitt aufweisen. Der Querschnitt der Dichtung kann aber auch jede andere geeignete geometrische Form umfassen.

Gemäß einer weiteren Ausführungsform erhebt sich die Dichtung zumindest geringfügig über die Anlagefläche. Dadurch wird beim Koppeln der Kopplungskomponente des ersten gasführenden Bauteils mit der Kopplungskomponente des zweiten gasführenden Bauteils die Dichtung durch die beiden Kopplungskomponenten zusammengepresst und gequetscht, um so eine zuverlässige Dichtwirkung zu erreichen.

Die Erfindung betrifft ferner ein gasführendes Bauteil einer Abgasanlage für eine Verbrennungskraftmaschine, insbesondere für eine Verbrennungskraftmaschine eines Kraftfahrzeugs, mit einer Kopplungskomponente gemäß zumindest einer der vorstehend beschriebenen Ausführungsformen sowie eine Abgasanlage mit einem solchen Bauteil (erstes Bauteil), wobei die Kopplungskomponente (erste Kopplungskomponente) mit einer Kopplungskomponente (zweite Kopplungskomponente) eines weiteren gasführenden Bauteils (zweites Bauteil) der Anlage gekoppelt ist. Die zweite Kopplungskomponente weist eine Anlagefläche, die mit der Anlagefläche der ersten Kopplungskomponente in Kontakt steht, und eine Dichtfläche auf, die mit der Dichtung der ersten Kopplungskomponente in Kontakt steht. Die Dichtfläche kann ein Teil der Anlagefläche sein.

Ein weiterer Aspekt der vorliegenden Erfindung betrifft ein Verfahren zur Herstellung einer Kopplungskomponente gemäß einer der vorstehenden Ausführungsformen, wobei die Dichtung in axialer Richtung in die Nut eingepresst wird, so dass eine Klemmverbindung und/oder ein Formschluss ausgebildet wird, um die Dichtung verliersicher in der Nut zu fixieren.

Insbesondere kann die Dichtung flächig eingepresst werden, so dass beim Einpressen der Dichtung in die Nut auf jeden Teil der Dichtung eine im Wesentlichen gleiche Kraft wirkt. Zusätzlich oder alternativ kann die Dichtung abschnittsweise in die Nut gepresst werden, bis die Dichtung teilweise oder vollständig in der Nut fixiert ist.

Gemäß einer weiteren Ausführungsform wird eine an der Dichtung ausgebildete und vorgefertigte Erhebung in die Durchbrechung eingeführt. Insbesondere wird die Erhebung in die Durchbrechung der Nut gepresst. Hierbei kann eine elastische und/oder plastische Verformung der Dichtung erzeugt werden, welche eine Klemmwirkung zur Folge hat, insbesondere wenn der Querschnitt der Erhebung geringfügig größer ist als der Querschnitt der Durchbrechung. Insbesondere ragt die Erhebung bereichsweise und/oder vollständig in die Durchbrechung hineinragen oder sogar über einen Rand der Durchbrechung hinaus. Es ist auch vorstellbar, dass die Dichtung teilweise oder zunächst nur an den Stellen, an denen die Erhebungen in die Durchbrechungen hineinragen, in die Nut gepresst wird. Das endgültige Einpressen der Dichtung erfolgt dann automatisch im Zuge der Montage der beiden Bauteile.

Gemäß einer weiteren Ausführungsform wird durch das Einpressen der Dichtung eine plastische Verformung der Erhebung bewirkt und/oder erst eine Erhebung erzeugt, die in die Durchbrechung hineinragt. Beispielsweise kann die Erhebung, welche in die Durchbrechung hineingepresst wird, deformiert werden und/oder verstärkt werden, so dass eine verstärkte Klemmwirkung entsteht. Beispielsweise kann sich eine vorgefertigte Erhebung, welche abschnittsweise in die Durchbrechung hineinragt, durch das Einpressen der Dichtung über einen Rand der Durchbrechung auf der der Anlagefläche abgewandten Seite erheben. Zusätzlich oder alternativ kann das Einpressen der Dichtung in die Nut so stark sein, dass die Erhebung dadurch erzeugt wird. Die Verformung kann in beiden Fällen elastisch und/oder plastisch erfolgen.

Gemäß einer weiteren Ausführungsform weist die Dichtung an der dem Nutgrund abgewandten Seite eine Stirnflächenerhebung auf, die bei der Montage fluchtend mit der Durchbrechung angeordnet ist. Die Stirnflächenerhebung verstärkt den Effekt der Erhebungsbildung auf der der Anlagefläche abgewandten Seite. Durch das axiale und planare Pressen auf die Dichtung wird somit der Effekt verstärkt, dass überschüssiges Material der Dichtung in die Durchbrechung gedrückt wird.

Gemäß einer weiteren Ausführungsform wird die Dichtung durch die Durchbrechung mit einer Kraft beaufschlagt, um diese plastisch zu verformen, wobei die Kraft in eine Richtung entgegen der Einführ- und Montagerichtung der Dichtung und/oder quer oder schräg dazu aufgebracht wird. Dabei ist die Dichtung insbesondere axial gesichert oder axial abgestützt, um zu verhindern, dass die Dichtung durch die durch die Durchbrechung aufgebrachte Kraft aus der Nut gedrückt wird.

Gemäß einer weiteren Ausführungsform wird Material der Dichtung durch die Kraftbeaufschlagung durch die Durchbrechung zumindest abschnittsweise gegen eine Wandung der Durchbrechung gepresst. Das gegen die Wandung drückende Material der Dichtung kann eine Klemmwirkung erzeugen, welche die Fixierung der Dichtung in der Nut bewirkt.

Gemäß einer weiteren Ausführungsform wird Material der Dichtung durch die Kraftbeaufschlagung die durch die Durchbrechung zumindest abschnittsweise derart umgeformt, dass das Material der Dichtung im Bereich der Durchbrechung einen Hinterschnitt bildet und so ein die Dichtung sichernder Formschluss entsteht.

Gemäß einer weiteren Ausführungsform wird Material der Dichtung durch die vorstehend beschriebene Kraftbeaufschlagung in eine weitere Durchbrechung und/oder zumindest eine Vertiefung in der Nut gedrängt. Zusätzlich oder alternativ können die weiteren Durchbrechungen in den Seitenflanken der Nut vorgesehen sein. Durch die Kraftbeaufschlagung kann Material der Dichtung verdrängt und in die Durchbrechungen oder Vertiefungen in den Seitenflanken der Nut gepresst werden. Dies führt zu einem noch stärkeren Halt der Dichtung in der Nut. Es ist auch vorstellbar, dass lediglich zumindest eine Durchbrechung und/oder Vertiefung in einer der oder beiden Seitenflanken vorgesehen sind. Durch das Pressen der Dichtung in die Nut kann dann Material der Dichtung in die Durchbrechung und/oder Vertiefung ausweichen. Das in die Durchbrechung und/oder Vertiefung hineinragende Material der Dichtung bildet bezüglich der axialen Richtung ebenfalls einen Hinterschnitt mit sichernder Wirkung.

Gemäß einer weiteren Ausführungsform erfolgt die Kraftbeaufschlagung durch die Durchbrechung mittels eines keilförmigen Werkzeugs, da dieses eine effiziente Verdrängung von Dichtungsmaterial ermöglicht, um die vorstehend beschriebenen Effekte zu erzeugen (Klemmwirkung und/oder Formschluss). Das Werkzeug kann ein keilförmiger Stempel sein. Es ist jedoch auch vorstellbar, dass das Werkzeug ein Werkzeug mit einer spitzen und insbesondere konischen Form oder ein Werkzeug mit einer flachen Angriffsfläche ist.

Für das erfindungsgemäße Verfahren gelten sinngemäß die Ausführungen zu der erfindungsgemäßen Kopplungskomponente (und umgekehrt); dies gilt insbesondere hinsichtlich der erläuterten Ausführungsformen und der damit einhergehenden Vorteile.

Nachfolgend wird die Erfindung rein beispielhaft unter Bezugnahme auf die Zeichnungen dargestellt. Es zeigen:
- Fig. 1A: einen Querschnitt einer Ausführungsform der erfindungsgemäßen Kopplungskomponente ohne Dichtung,
- Fig. 1B: eine Frontalansicht auf in Fig. 1A gezeigte Ausführungsform,
- Fig. 1C: eine isometrische Ansicht der in Fig. 1A gezeigten Ausführungsform,
- Fig. 2: eine Darstellung einer Ausführungsform des erfindungsgemäßen Verfahrens zur Herstellung einer erfindungsgemäßen Kopplungskomponente,
- Fig. 3A - 6B: jeweils einen Ausschnitt eines Querschnitts einer Ausführungsform der erfindungsgemäßen Kopplungskomponente,
- Fig. 7: einen Ausschnitt eines Querschnitts einer Ausführungsform der erfindungsgemäßen Kopplungskomponente vor und nach dem Pressen der Dichtung in die Nut,
- Fig. 8A, 8B: jeweils einen Ausschnitt eines Querschnitts einer Ausführungsform der erfindungsgemäßen Kopplungskomponente und
- Fig. 9A - 9C: verschiedene Ausführungsformen der Dichtung bzw. der Nut.

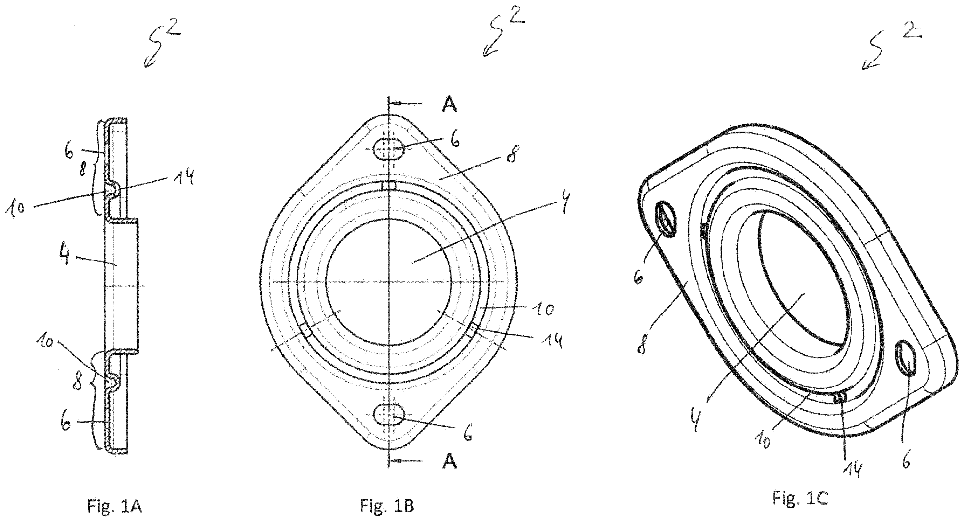

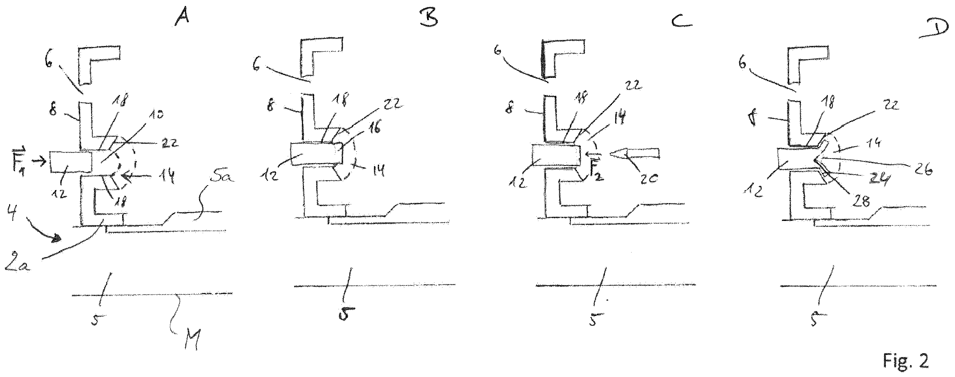

Fig. 1A zeigt einen Querschnitt einer Kopplungskomponente 2, welche eine Öffnung 4 aufweist, in der ein Endabschnitt eines gasführenden Bauteils 5 einer Abgasanlage (siehe Fig. 2) aufgenommen werden kann. Die Öffnung 4 wird von einen Anlageabschnitt mit einer Anlagefläche 8 umgeben, welche mit einer komplementären Fläche eines Anlageabschnitts einer Kopplungskomponente eines weiteren Bauteils in Anlage bringbar ist und die eine die Öffnung 4 radial außerhalb und in Umfangsrichtung umgebende Nut 10 umfasst. In der Nut 10 kann eine in Fig. 1 nicht gezeigte Dichtung 12 fixiert werden. Die Nut 10 weist zumindest eine Durchbrechung 14 auf. Ferner sind Befestigungslöcher 6 vorgesehen, über die die Kopplungskomponente 2 an der Kopplungskomponente eines weiteren gasführenden Bauteils befestigt werden kann. Insbesondere kann die Kopplungskomponente 2 eine Mehrzahl von Befestigungslöchern und/oder Durchbrechungen umfassen, wobei die Anordnung, Verteilung und/oder Form der Befestigungslöcher und/oder Durchbrechungen bedarfsgerecht gewählt werden kann.

Fig. 1B zeigt die Frontalansicht bzw. eine Sicht auf eine Seite der Anlagefläche 8 der Kopplungskomponente 2, wodurch ersichtlich ist, dass diese - bildlich gesprochen - eine Zitronenform aufweist, wobei ein erstes Ende und ein zweites Ende der Kopplungskomponente 2 konisch zulaufen. Jedes der beiden Enden umfasst jeweils ein Befestigungsloch 6. Zwischen den beiden Befestigungslöchern 6 ist die kreisförmige Nut 10 angeordnet, welche radial außerhalb der Öffnung 2 verläuft, welche im Zentrum der Kopplungskomponente 2 angeordnet ist.

Die Nut 10 umfasst außerdem drei Durchbrechungen 14, welche in einem 120° Winkel versetzt zueinander in der kreisförmigen Nut 10 angeordnet sind.

Fig. 1C zeigt eine isometrische Ansicht einer erfindungsgemäßen Komponente 2, wobei sie im Vergleich zu Fig. 1A und 1B um 90° gedreht ist.

Fig. 2 illustriert ein Verfahren zur Herstellung einer Kopplungskomponente 2 mit den Schritte A bis D. Insbesondere wird für die Illustration des Verfahrens nur ein Teil eines Querschnitts der Kopplungskomponente 2 dargestellt. Ein die Öffnung 4 umschließender Bund 2a der Kopplungskomponente 2 ist mit einer Wand 5a eines Rohrs 5 einer weiter nicht gezeigten Abgasanlage eines Verbrennungsmotors eines Kraftfahrzeugs verschweißt. Aus Gründen der Übersichtlichkeit sind lediglich die oberhalb einer Mittelachse M liegende Teile des Rohrs 5 und der Kopplungskomponente 2 gezeigt.

In einem ersten Schritt A wird dabei eine Dichtung 12 in die Nut 10 gedrückt. Beispielsweise kann die Dichtung 12 mittels einer axialen und planaren Krafteinwirkung F₁ in die Nut 10 gedrückt werden, bis die Dichtung 12 in die Durchbrechung 14 der Nut 10 hineinragt (Schritt B). Alternativ kann die Dichtung 12 auch mittels punktueller Krafteinwirkung, z.B. nur in Bereichen, in denen die Durchbrechungen 14 angeordnet sind, in die Nut 10 gedrückt werden.

Im vorliegenden Beispiel bildet ein Teil der Dichtung 12 einen Fixierabschnitt 16, welcher in die Durchbrechung 14 hineinragt (Schritt B). Da eine von Seitenwänden 18 der Nut 10 ausgehende Klemmkraft in der Regel nicht ausreicht, um die Dichtung 12 dauerhaft und mit einer nötigen Zuverlässigkeit in der Nut 10 zu fixieren, wird der Fixierabschnitt 16 der Dichtung 12 mittels eines keilförmigen Werkzeugs 20 von einer der Anlagefläche 8 abgewandten Seite plastisch so verformt, dass ein Material der Dichtung 12 bereichsweise verdrängt wird und eine Wandung 22 der Durchbrechung 14 zumindest abschnittsweise hintergreift (siehe Schritte C und D). Dabei wird mit dem keilförmigen Werkzeug 20 eine axiale Kraft F₂ entgegen der Montagerichtung und bevorzugt zentral auf den Fixierabschnitt 16 ausgeübt. Eine dezentrale und/oder schräge oder seitliche Kraftbeaufschlagung kann ebenfalls zur Erzeugung eines Hinterschnitts führen.

Der dadurch entstehende Hinterschnitt 24 sorgt dafür, dass die Dichtung 12 formschlüssig in der Nut 10 fixiert wird. Der Fixierabschnitt 16 bzw. der plastisch verformte Teil der Dichtung 12 umfasst anschließend eine Vertiefung 26 auf der der Anlagefläche abgewandten Seite der Kopplungskomponente 2, wobei die Vertiefung 26 durch die axiale Krafteinwirkung F₂ mit dem keilförmigen Werkzeug 20 entstanden ist. Insbesondere weist die Vertiefung 26 einen Vertiefungsgrund 28 auf, von welchem ausgehend das verdrängte Material der Dichtung 12 divergiert und die Durchbrechung 14 der Nut 10 hintergreift.

Die von der Nut 10 aus gesehene Divergenz der gegenüberliegenden Abschnitte der Wandung 22 führte dazu, dass eine zuverlässige Anlage des plastisch verformten Materials des Abschnitts 16 sichergestellt ist.

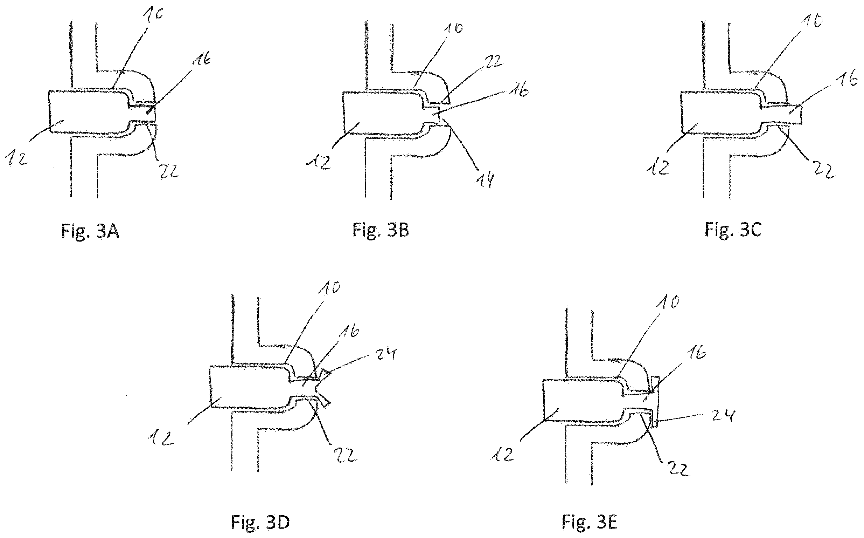

Fig. 3A bis 3E zeigen unterschiedliche Ausführungsformen der Dichtung 12 und der Nut 10. Fig. 3A zeigt eine Dichtung 12 in einer Nut 10, wobei die Dichtung 12 eine Erhebung 16 (diese bildet hier den Fixierabschnitt) aufweist, welche komplementär zu der Durchbrechung 14 aber mit leichtem Übermaß geformt ist, so dass eine Klemmwirkung zwischen der Wandung 22 der Durchbrechung 14 und der Erhebung 16 die Dichtung 12 in der Nut 10 fixiert, und welche vollständig in die Durchbrechung 14 hineinragt, insbesondere die Durchbrechung 14 im Wesentlichen vollständig ausfüllt. Die Dichtung 12 kann eine Mehrzahl von Erhebungen 16 aufweisen, bevorzugt eine gleiche Anzahl von Erhebungen 16 und Durchbrechungen 14. Die Erhebungen 16 können vorgefertigt sein, d.h. die Erhebungen 16 sind bereits vor dem Einsetzen der Dichtung 12 in die Nut 10 vorhanden. Es ist auch möglich, dass die Erhebungen 16 durch axiales Drücken der Dichtung 24 in Montagerichtung in die Nut 10 erst erzeugt oder verstärkt werden. Gleiches gilt für die Fig. 3B bis 3E.

Fig. 3B zeigt die in Fig. 3A beschriebene Ausführungsform, wobei die Erhebung 16 nur abschnittsweise in die Durchbrechung 14 hineinragt.

Fig. 3C zeigt die in Fig. 3A beschriebene Ausführungsform, wobei die Erhebung 16 vollständig in die Durchbrechung 14 und darüber hinaus ragt, so dass ein Teil der Erhebung 16 auf der der Anlagefläche abgewandten Seite absteht.

Fig. 3D zeigt die in Fig. 3C beschriebene Ausführungsform, wobei die Erhebung 16 durch ein keilförmiges Werkzeug, mit dem durch die Durchbrechung 14 eine axiale Kraft F₂ entgegen der Montagerichtung der Dichtung 12 aufgebracht wird, plastisch so aufgespreizt wird, dass ein Hinterschnitt entsteht. Auch in dem Fall, dass die Erhebung 16 der Dichtung 12 nur abschnittsweise oder vollständig in die Durchbrechung 14 hineinragt, kann die Dichtung 12 mittels eines Werkzeugs so verformt werden, dass plastisch verformtes Material der Dichtung 12 aus der Durchbrechung 14 herausgequetscht wird und einen Hinterschnitt bildet und/oder dass das Material gegen die Wandung 22 der Durchbrechung 14 drückt. Letzteres führt zu einer zuverlässigen Klemmwirkung.

Fig. 3E zeigt eine Ausführungsform, bei der ein abstehender Teil der Erhebung 16 mittels eines Werkzeugs mit einer flachen Angriffsfläche verstemmt wurde.

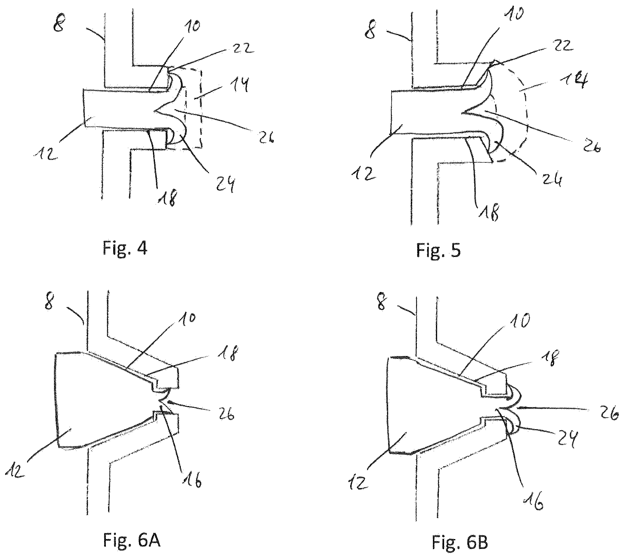

Fig. 4 zeigt eine Ausführungsform, bei der die Durchbrechung 14 auch einen Teil der Seitenwände 18 der Nut 10 umfasst, wobei die Wandungsabschnitte 22 der Durchbrechung 14 in einer Ebene liegen, welche senkrecht zur axialen Richtung der Nut 10 oder der Durchbrechung 14 steht. Der Abschnitt 16 der Dichtung 12 ist so für eine Umformung gut zugänglich.

Fig. 5 zeigt eine weitere Ausführungsform, bei der die Durchbrechung 14 Wandungsabschnitte 22 aufweist, die nicht parallel und nicht senkrecht zur axialen Richtung verlaufen (siehe auch Fig. 2). Vielmehr ist der Querschnitt der Durchbrechung konisch zulaufend. Insbesondere können die Wandungsabschnitte 2 der Durchbrechung parallel und/oder senkrecht und/oder in einem anderen beliebigen Winkel zur axialen Richtung verlaufen.

Fig. 6A und 6B zeigen verschiedene Ausführungsformen, bei denen die Dichtung 12 und die Nut 10 in der Querschnittsansicht zumindest abschnittsweise eine konisch zulaufende Form aufweisen. Durch die konisch zulaufende Form der Dichtung 12 und die komplementäre konisch zulaufende Form der Nut 10 kann sich das Dichtungsmaterial einfacher an die Nut 10 anschmiegen. Auch ein Einführen der Dichtung 12 in die Nut 10 wird vereinfacht.

Fig. 6A zeigt eine konisch geformte Dichtung 12, die abschnittsweise in die Durchbrechung 14 hineinragt (Fixierabschnitt 16) und durch eine Klemmwirkung innerhalb der Durchbrechung 14 die Dichtung 12 in der Nut 10 fixiert ist. Die Klemmwirkung wird durch die plastische Verformung des Abschnitts 16 verstärkt oder sogar erst erzeugt.

Fig. 6B zeigt eine Ausführungsform, bei der ein aus der Durchbrechung 14 hinausragender Teil des Abschnitts 16 der Dichtung 12 plastisch verformt ist, um einen Hinterschnitt zu bilden.

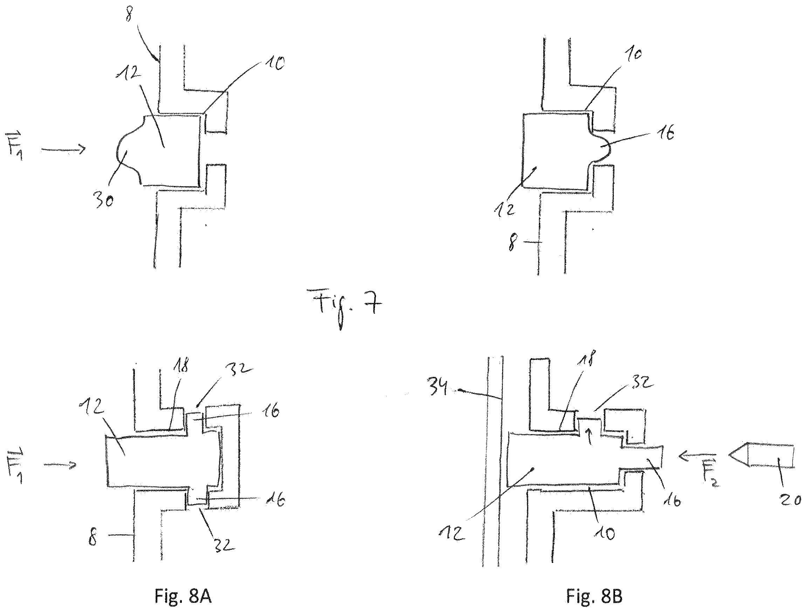

Fig. 7 zeigt eine Ausführungsform der Erfindung, bei der die Dichtung 12 auf der der Nut 10 abgewandten Seite eine Erhebung 30 aufweist. Wird die Dichtung 12 mit einer Kraft F₁ in axialer Richtung in die Nut 10 gedrückt, so führt die Erhebung 30 dazu, dass - sobald die Dichtung 12 axial in der Nut 10 anschlägt - Material der Erhebung 30 in den Grundkörper der Dichtung 12 gedrängt wird, was wiederum zur Folge hat, das dort befindliches Material in die Durchbrechung 14 hinein gedrückt wird.

Fig. 8A zeigt eine Ausführungsform, bei der zwei Seitenwanddurchbrechungen 32 in den Seitenwänden 18 der Nut 10 vorgesehen sind. Durch das axiale Drücken der Dichtung 12 in die Nut 10 mit der Kraft F₁ wird das Material der Dichtung 12 in die beiden Seitenwanddurchbrechungen 32 der Nut 10 gedrückt, sobald die Dichtung 12 axial in der Nut 10 anschlägt, so dass schließlich ein Teil der Dichtung 12 (nämlich die Fixierabschnitte 16) in beide Seitenwanddurchbrechungen 32 zumindest abschnittsweise hineinragt. Vertiefungen in den Seitenwänden 18 bewirken einen vergleichbaren Effekt wie die Durchbrechungen 32.

Optional kann mit Hilfe eines keilförmigen Werkzeugs 20 der in die Seitenwanddurchbrechungen 14 hineinragende Teil der Dichtung 12 plastisch verformt werden (analog z.B. Fig. 6A).

In Fig. 8B umfasst die Nut 10 eine Seitenwanddurchbrechung 32 in der Seitenwand 18 und eine Durchbrechung 14 an einem Nutgrund. Die Dichtung 12, welche eine Erhebung 16 aufweist, die z.B. eine zu der Durchbrechung 14 am Nutgrund komplementäre Form aufweist, kann bei einer ersten axialen Kraftbeaufschlagung F₁ in Montagerichtung in die Nut 10 gedrückt werden, so dass ein Teil der Erhebung 16 auf der der Anlagefläche 8 abgewandten Seite absteht. Dieser abstehende Teil der Erhebung 16 kann bei einer zweiten axialen Kraftbeaufschlagung F₂ entgegen der Montagerichtung in die Durchbrechung 14 beispielsweise mittels eines keilförmigen Werkzeugs 20 hineingedrückt werden, sodass ein Hinterschnitt erzeugt wird und der erzeugte Druck zusätzlich dazu führt, dass ein Teil der Dichtung 12 in die Seitenwanddurchbrechung 32 gedrängt wird, wobei sich die Dichtung 12 bei der zweiten axialen Kraftbeaufschlagung F₂ auf der Seite der Anlagefläche 8 auf einem Anlageelement 34 abstützt, damit die Dichtung 12 nicht aus der Nut 10 herausgedrückt wird.

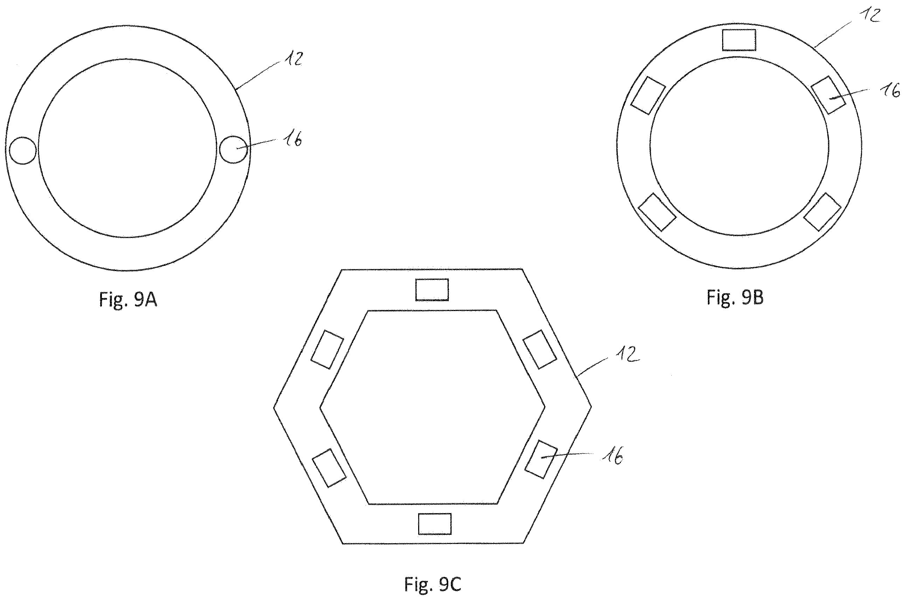

Fig. 9A bis 9C zeigen verschiedene Formen der Dichtung 12 bzw. der Nut 10 und verschiedene Anordnungsmöglichkeiten und Formen der Erhebungen 16 der Dichtung 12 bzw. der Durchbrechungen 14 der Nut 10. Im Folgenden werden die Formen und Anordnungen lediglich in Bezug auf die Dichtung 12 beschrieben. Es ist jedoch klar, dass die entsprechenden Anordnungen und Formen auch für die Durchbrechungen 14 in der Nut 10 gelten können.

Fig. 9A zeigt einen kreisförmigen Dichtungsring 12 mit zwei Erhebungen 16, welche achsensymmetrisch auf der Dichtung 12 angeordnet sind. D.h. die kreisförmigen Erhebungen 16 sind achsensymmetrisch zu einer durch den Mittelpunkt der kreisförmigen Dichtung 12 verlaufenden Achse angeordnet.

Fig. 9B zeigt einen kreisförmigen Dichtungsring 12, bei der fünf rechteckige Erhebungen 16 auf der Dichtung 12 angeordnet sind, wobei der jeweilige Abstand zwischen zwei benachbarten Erhebungen 16 gleich ist.

Fig. 9C zeigt einen polygonalen Dichtungsring 12 mit sechs Ecken, welcher auf jeder Seitenfläche zwischen zwei Ecken eine rechteckige Erhebung 16 umfasst, d.h. insgesamt sechs Erhebungen 16.

Aus vorstehenden Erläuterungen ist ersichtlich, dass einzelne Aspekte der beschriebenen Ausführungsformen bei Bedarf problemlos miteinander kombiniert werden können. Allen Ausführungsformen ist gemeinsam, dass auf einfache Weise eine zuverlässige Sicherung der Dichtung bei deren Vormontage an der Kopplungskomponente erreicht wird. Diese zuverlässige Sicherung erleichtert die Montage eines mit dieser Komponente versehenen Bauteils an einen anderen Bauteil. Die Dichtung ist dann nämlich schon korrekt vormontiert und muss nicht als separates Element bereitgestellt und eingelegt werden. Letztlich führt diese Montageerleichterung zu Kostenersparnissen und einer erhöhten Prozesssicherheit.

### Liste der Bezugszeichen

- 2: Kopplungskomponente
- 2a: Bund
- 4: Öffnung
- 5: Bauteil
- 5a: Bauteilwand
- 6: Befestigungslöcher
- 8: Anlagefläche
- 10: Nut
- 12: Dichtung
- 14: Durchbrechung
- 16: Fixierabschnitt
- 18: Seitenwände der Nut
- 20: keilförmiges Werkzeug
- 22: Wandung
- 24: Hinterschnitt
- 26: Vertiefung
- 28: Vertiefungsgrund
- 30: Erhebung
- 32: Seitenwanddurchbrechung
- 34: Anlageelement

- M: Mittelachse

## Patentansprüche

1. Kopplungskomponente zur dichten Kopplung eines ersten und eines zweiten gasführenden Bauteils einer Abgasanlage, insbesondere zur Kopplung zweier Rohrleitungsabschnitte, umfassend:
eine Öffnung (4), in welcher ein Endabschnitt des ersten Bauteils (5) aufnehmbar ist;
einen die Öffnung umgebenden Anlageabschnitt mit einer Anlagefläche (8), die mit einer komplementären Fläche eines Anlageabschnitts einer Kopplungskomponente des zweiten Bauteils in Anlage bringbar ist und die eine die Öffnung radial außerhalb und in Umfangsrichtung umgebende Nut (10) umfasst, die zumindest eine Durchbrechung (14) aufweist; und
eine in der Nut angeordnete, hitzebeständige Dichtung (12), die zumindest einen Fixierabschnitt (16) aufweist, der zumindest abschnittsweise in die Durchbrechung hineinragt und mit dieser eine Klemmverbindung und/oder einen Formschluss ausbildet, um die Dichtung verliersicher in der Nut zu fixieren.

2. Kopplungskomponente nach Anspruch 1,
wobei die Dichtung zumindest teilweise aus Graphit gefertigt ist.

3. Kopplungskomponente nach Anspruch 1 oder 2,
wobei die Kopplungskomponente flanschartig ausgebildet ist und/oder wobei die Kopplungskomponente mit dem ersten Bauteil (5) der Abgasanlage einstückig ausgebildet ist und/oder stoffschlüssig, kraftschlüssig und/oder formschlüssig verbunden ist.

4. Kopplungskomponente nach einem der vorstehenden Ansprüche,
wobei der in die Durchbrechung (14) hineinragende Fixierabschnitt (16) zumindest abschnittsweise elastisch verformt ist.

5. Kopplungskomponente nach einem der vorstehenden Ansprüche,
wobei der in die Durchbrechung (14) hineinragende Fixierabschnitt (16) zumindest abschnittsweise plastisch verformt ist, insbesondere wobei ein plastisch verformter Teil des Fixierabschnitts (16) einen Rand der Durchbrechung (14) auf der der Anlagefläche (8) abgewandten Seite zumindest teilweise hintergreift.

6. Kopplungskomponente nach einem der vorstehenden Ansprüche,
wobei die Dichtung (12) auf der der Anlagefläche (8) abgewandten Seite im Bereich der Durchbrechung (14) zumindest abschnittsweise eine Vertiefung (26) aufweist.

7. Kopplungskomponente nach einem der vorstehenden Ansprüche,
wobei die zumindest eine Durchbrechung (14) an einem Nutgrund der Nut (10) angeordnet ist, wobei die Durchbrechung insbesondere auch zumindest einen Abschnitt von zumindest einer Seitenwand (18) der Nut umfasst.

8. Kopplungskomponente nach einem der vorstehenden Ansprüche,
wobei eine Wandung (22) der Durchbrechung (14) Wandungsabschnitte aufweist, die in axialer Richtung der Durchbrechung gesehen nicht parallel zueinander verlaufen, wobei insbesondere die Wandungsabschnitte von der Nut (10) aus gesehen divergieren.

9. Kopplungskomponente nach einem der vorstehenden Ansprüche,
wobei die Dichtung (12) zumindest abschnittweise einen Querschnitt aufweist, der sich in Richtung eines Nutgrundes der Nut (10) verjüngt, wobei der Querschnitt insbesondere abschnittsweise konisch ist.

10. Kopplungskomponente nach einem der vorstehenden Ansprüche,
wobei sich die Dichtung (12) zumindest geringfügig über die Anlagefläche (8) erhebt.

11. Verfahren zur Herstellung einer Kopplungskomponente nach einem der vorstehenden Ansprüche,
wobei die Dichtung (12) in axialer Richtung in die Nut (10) eingepresst wird, sodass eine Klemmverbindung und/oder ein Formschluss ausgebildet wird, um die Dichtung verliersicher in der Nut zu fixieren.

12. Verfahren nach Anspruch 11,
wobei durch das Einpressen eine plastische Verformung einer an der Dichtung (12) ausgebildeten und vorgefertigten Erhebung (16), die in die Durchbrechung (14) eingeführt wurde, bewirkt wird und/oder wobei durch das Einpressen eine Erhebung erzeugt wird, die in die Durchbrechung (14) hineinragt.

13. Verfahren nach Anspruch 11 oder 12,
wobei die Dichtung (12) an der dem Nutgrund abgewandten Seite eine Stirnflächenerhebung (30) aufweist, die bei der Montage fluchtend mit der Durchbrechung (14) angeordnet ist.

14. Verfahren nach einem der Ansprüche 11 bis 13,
wobei die Dichtung (12) durch die Durchbrechung (14) mit einer Kraft (F₂) beaufschlagt wird, um diese plastisch zu verformen, wobei die Kraft in einer Richtung entgegen der Einführ- und Montagerichtung der Dichtung und/oder quer und/oder schräg hierzu aufgebracht wird, insbesondere wobei Material der Dichtung (12) durch die Kraftbeaufschlagung (F₂) zumindest abschnittsweise gegen eine Wandung (22) der Durchbrechung (F₂) gepresst wird.

15. Verfahren nach Anspruch 14,
wobei Material der Dichtung (12) durch die Kraftbeaufschlagung (F₂) zumindest abschnittsweise derart umgeformt wird, dass das Material der Dichtung im Bereich der Durchbrechung (22) einen Hinterschnitt (24) bildet und/oder wobei Material der Dichtung (12) durch die Kraftbeaufschlagung(F₂) in eine weitere Durchbrechung (32) und/oder Vertiefung der Nut (10) gedrängt wird.
